# EUROPÄISCHE PATENTSCHRIFT

(11) **EP 2 385 005 B1**
(45) Veröffentlichungstag und Bekanntmachung des Hinweises auf die Patenterteilung: **02.10.2013**
(21) Anmeldenummer: 11161672.8
(22) Anmeldetag: 08.04.2011
(51) Int. Cl.: B65G 47/68

(54) **Förderstrecke zum Transport von Artikeln**
Conveyor line for transporting items
Trajectoire de transport destinée au transport de marchandises

(30) Priorität: 06.05.2010 DE 102010019797
(43) Veröffentlichungstag der Anmeldung: 09.11.2011
(73) Patentinhaber: Krones AG, 93073 Neutraubling (DE)
(72) Erfinder: Semmelrock, Albin, 83064 Raubling (DE); Druml, Johann, 83071 Stephanskirchen (DE)
(74) Vertreter: Benninger, Johannes

(56) Entgegenhaltungen:
- EP-B1- 2 027 047
- DE-A1- 2 743 885
- US-A- 1 755 720
- US-A- 2 646 870
- US-A- 4 231 463

## Beschreibung

Die vorliegende Erfindung betrifft eine Förderstrecke zum Transport von Artikeln in einem Artikelstrom von einer ersten Verarbeitungsvorrichtung zu einer zweiten Verarbeitungsvorrichtung, wobei die Förderstrecke einen ersten Förderabschnitt und einen zweiten Förderabschnitt umfasst und wobei der Artikelstrom im ersten Förderabschnitt mindestens zwei weitgehend nebeneinander angeordnete Artikel umfasst. Im zweiten Förderabschnitt ist mindestens ein Gassenblech zur Vereinzelung der Artikel in mindestens zwei Gassen angeordnet.

Beim Transport von Artikeln von einer ersten Verarbeitungsvorrichtung zu einer zweiten Verarbeitungsvorrichtung, insbesondere im Zulaufbereich von Verpackungsmaschinen, kommen die Artikel / Behälter im sogenannten Massenstrom an und werden in einzelne Gassen aufgeteilt.

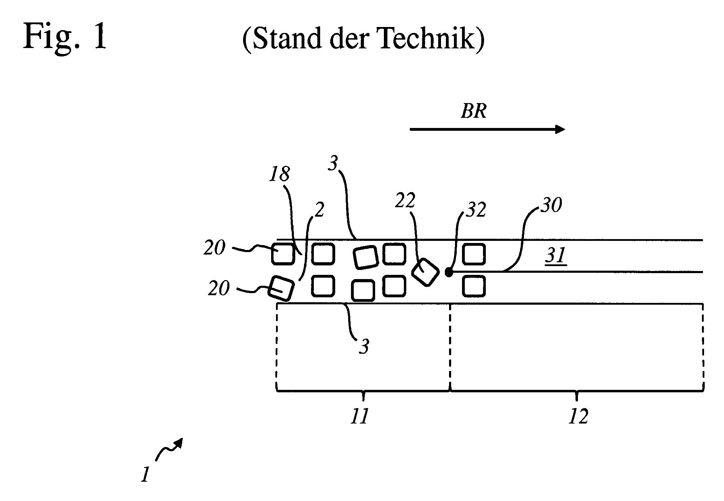

Insbesondere bei Artikeln mit einer eckigen Standfläche kann es bei der Aufteilung von zwei Artikeln auf einen Artikel mit Hilfe von einem Gassenblech zu Blockaden kommen, wenn sich die Artikel beim Transport verdreht haben. Dies passiert beispielsweise dadurch, dass sich die Artikel durch den Transport verschieben und sich ein Artikel mittig diagonal anordnet. Dieser blockiert dann bei der Zuteilung von zwei Artikeln auf einen Artikel pro Gasse den nachfolgenden Produktstrom und es kommt zu einer Störung, (siehe Fig. 1).

US 5 937 995 zeigt eine an beiden Seiten der Förderstrecke angeordnete so genannte Schikane, die die Förderstrecke im Bereich vor der Einteilung der Artikel in Einzelströme verengt, damit die transportierten Artikel mit einer runden Grundfläche sich eng gepackt zweireihig anordnen und eine erleichterte Aufteilung in die Einzelgassen möglich ist. Diese Vorrichtung ist aber nicht dazu geeignet, verdrehte Artikel mit einer eckigen Standfläche auszurichten und eine oben beschriebene Blockade zu verhindern.

Aufgabe der Erfindung ist es, zu transportierende Artikel, insbesondere Artikel mit einer eckigen Grundfläche bzw. Behälterform, so anzuordnen und auszurichten, dass keine Blockade im Gassenzulauf entsteht.

Die obige Aufgabe wird durch eine Förderstrecke gelöst, die die Merkmale in dem Patentanspruch 1 umfasst. Weitere vorteilhafte Ausgestaltungen werden durch die Unteransprüche beschrieben.

Die Erfindung betrifft eine Förderstrecke zum Transport von Artikeln von einer ersten Verarbeitungsvorrichtung zu einer zweiten Verarbeitungsvorrichtung.

Beispielsweise kann eine solche Förderstrecke zwischen einer Etikettiermaschine und einer Maschine zur Gebindeerstellung oder zur Anbringung von Henkeln o.ä. verwendet werden. Eine solche Förderstrecke kann aber auch im Zulaufbereich von Verpackungsmaschinen eingesetzt werden.

Die Förderstrecke umfasst einen ersten und einen zweiten Förderabschnitt. Die Artikel werden in dem ersten Förderabschnitt der Förderstrecke in einem Artikelstrom befördert, wobei mindestens zwei Artikel weitgehend nebeneinander angeordnet sind. Bei den transportierten Artikeln kann es sich um unterschiedliche Behälter, insbesondere Flaschen handeln, die vorzugsweise eine weitgehend eckige Standfläche bzw. Behälterform aufweisen. Die Förderstrecke ist aber auch für den Transport anderer Artikel, insbesondere von Flaschen mit einer runden Grundfläche bzw. Behälterform geeignet.

Die Artikel werden anschließend in einem zweiten Förderabschnitt mittels mindestens einem annähernd mittig angeordnetem Gassenblech in Einzelgassen aufgeteilt. Insbesondere ist eine solche Förderstrecke somit im Zulaufbereich einer Verpackungsmaschine angeordnet und dient der Aufteilung und Ausrichtung von im Massenstrom bzw. Artikelstrom transportierten, eine weitgehend eckige Standfläche bzw. Behälterform mit Längskanten aufweisenden Artikeln in einzelne Gassen.

Zwischen dem ersten und dem zweiten Förderabschnitt ein dritter Förderabschnitt angeordnet. Dieser dritte Förderabschnitt umfasst mindestens eine Krümmung. Vorzugsweise erfolgt eine Umlenkung der Artikel entlang einer Kurvenbahn. Gemäß einer bevorzugten Ausführungsform stellt der dritte Förderabschnitt eine Kurve mit mindestens zwei gegenläufigen Kurvenabschnitten dar.

Die Krümmung bzw. Krümmungen bilden eine Schikane für den Transportverlauf der Artikel. Die Schikane dient dazu, dass sich mittig angeordnete und somit bei der Aufteilung in einzelne Gassen blockierende insbesondere eckige Behälter, wieder ausrichten und in den ursprünglichen Fahrweg einordnen. Beispielsweise werden die Längskanten von verdrehten rechteckigen Artikeln wieder parallel zur Transportrichtung ausgerichtet. Somit kann eine Blockierung der Gasseneinfahrt bei der Aufteilung von zwei weitgehend nebeneinander angeordneten Artikeln auf einen Artikel pro Gasse des zweiten Förderabschnitts verhindert werden.

Gemäß einer besonders bevorzugten Ausführungsform sind der erste Förderabschnitt und der zweite Förderabschnitt in einer Linie oder parallel zueinander angeordnet. Der zwischen dem ersten und dem zweiten Förderabschnitt angeordnete dritte Förderabschnitt bildet durch mindestens eine Krümmung entlang von seitlichen Führungen eine Schikane zur Auslenkung der im Massenstrom bzw. Artikelstrom transportierten Artikel. Hierbei begrenzen die seitlichen Führungen den Massenstrom bzw. Artikelstrom und bilden eine Kurvenbahn.

Insbesondere beschreibt der dritte Förderabschnitt eine Art Sichelform bzw. eine Art Teilkreissegment mit einem Radius. Das Teilkreissegment umfasst eine Teilumfangslänge, die mindestens der größten Breite von drei zu transportierenden Artikeln entspricht.

Die mindestens eine Krümmung des dritten Förderabschnitts bewirkt eine Auslenkung der Artikel gegenüber dem ersten und / oder dem zweiten Förderabschnitt um eine bestimmte Distanz, wobei diese durch die Ausgestaltung des dritten Förderabschnitts festgelegt wird. Vorzugsweise entspricht dieser Distanzabschnitt mindestens der Hälfte der Breite oder der Länge der transportierten Artikel senkrecht zur Laufrichtung. Werden Artikel mit einer kreisrunden Grundfläche transportiert, dann entspricht der Distanzabschnitt vorzugsweise mindestens der Hälfte des Durchmessers der Artikel. Aufgrund der bereits beschriebenen Anpassungsmöglichkeiten des dritten Förderabschnitts kann der benötigte Distanzabschnitt in Abhängigkeit von den zu befördernden Artikeln eingestellt werden.

Die Behälter weichen durch die Schikane um mindestens den halben Behälterdurchmesser - beim Transport von Behältern mit einer runden Grundfläche - bzw. um mindestens eine halbe Behälterbreite - bezogen auf die Behälterbreite senkrecht zur Transportrichtung - von ihrem eigentlichen Fahrweg ab. Dies führt zu der oben beschriebenen vorteilhaften Wiederausrichtung.

Gemäß einer weiteren Ausführungsform der Erfindung wird die Schikane nur bis zur Hälfte der oben beschriebenen Teilumfangslänge ausgeführt. Dies bedeutet, dass der Radius bzw. die Bogenform nur zur Hälfte ausgeführt wird. Das führt dazu, dass der zweite Förderabschnitt parallelverschoben zum ersten Förderabschnitt verläuft.

Gemäß einer weiteren Ausführungsform der Erfindung wird die Schikane ab der Hälfte der Umfangslänge geradlinig ausgeführt. Vorzugsweise ist der geradlinige Abschnitt so ausgeführt, dass der anschließende zweite Förderabschnitt eine Linie mit dem ersten Förderabschnitt bildet.

Eine weitere bevorzugte Ausführungsform der Erfindung sieht vor, dass die Führungen des dritten Förderabschnitts stumpf an die Geländerführungen des ersten und/oder zweiten Förderabschnitts anschließen.

Der zwischen dem ersten und dem zweiten Förderabschnitt angeordnete dritte Förderabschnitt umfasst seitliche Führungen zur Begrenzung des Artikelstroms. Gemäß einer Ausführungsform der Erfindung sind diese seitlichen Führungen aus Einzelsegmenten aufgebaut, die beweglich gelagert sind. Das heißt die Einzelsegmente sind zueinander in einem Winkel beweglich, ähnlich einer Kette. Somit ist es möglich, einen variablen Radius einzustellen und die Schikane speziell an die transportierten Artikel anzupassen. Es wäre also denkbar die Schikane als "S"-förmige Umlenkung auszuführen.

Die einzelnen Segmente können aber auch so miteinander verbunden sein, dass die Beweglichkeit und somit die Verstellung der einzelnen Segmente im Winkel zueinander auf maximal 180° begrenzt sind. Dies führt dazu, dass die aus den Einzelsegmenten aufgebaute seitliche Führung nur sichel-förmig anstelle von "S"-förmig ausgestaltet ist.

Weiterhin können die Geländerführungen der drei Förderabschnitte parallelverschieblich einstellbar sein. Dies ermöglicht eine flexible Anpassung der Förderstrecke an die transportierten Artikel.

Die seitlichen Führungen des dritten Förderabschnitts können zur Erleichterung des Transports der Artikel gleitfördernd ausgestaltet sein. Beispielsweise handelt es sich um glattpolierte Edelstahl- Seitenbleche oder um seitliche Führungen, die eine gleitfördernde Beschichtung wie z.B. Teflon oder aber auch eine Gleitlackbeschichtung o.ä., aufweisen.

An den Führungsinnenseiten der Schikane können zusätzliche Führungselemente angebracht werden, die jeweils an die transportierten Artikel angepasst werden können. Bei einem Formatwechsel bzw. Produktwechsel, beispielsweise bei einer Änderung der Flaschengeometrie (Länge, Breite oder Durchmesser) muss die Grundführung bzw. Grundschikane nicht geändert werden, sondern kann durch einen Austausch der Führungselemente einfach angepasst werden. Die Führungselemente können auf dem Fachmann bekannte Art und Weise angebracht werden. Beispielsweise können die Führungselemente durch aufstecken, aufklippsen, über magnetische Verbindungselemente, anschrauben etc. lösbar befestigt werden. Um einen weitgehend reibungsarmen Transport der Artikel zu gewährleisten sind die Führungselemente ähnlich wie die Führungen vorzugsweise gleitfördernd (z.B. Rollen o.ä.) ausgestaltet.

Die in dem dritten Förderabschnitt ausgerichteten Artikel laufen anschließend in den zweiten Förderabschnitt ein, in dem sie mittels mindestens eines Gassenblechs in Gassen vereinzelt werden. Gemäß einer bevorzugten Ausführungsform umfasst das mindestens eine Gassenblech im Einlaufbereich für den Artikel, d.h. im Grenzbereich zwischen dritten und zweiten Förderabschnitt, eine beweglich gelagerte, insbesondere frei laufende Rolle, die die Zuleitung der Artikel zu den Gassen erleichtert. Die freilaufende Rolle ist dabei stirnseitig an dem Gassenblech insbesondere über die gesamte Höhe des Gassenblechs angeordnet. Das Gassenblech ist vorzugsweise mittig in dem zweiten Förderabschnitt angeordnet.

Der Transport der Artikel in der Förderstrecke erfolgt vorzugsweise auf einem Endlosförderband, insbesondere auf einem Mattenkettenförderer o.ä.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechend nicht immer den realen Größenverhältnissen, da einige Formen vereinfacht und andere Formen zur besseren Veranschaulichung vergrößert im Verhältnis zu anderen Elementen dargestellt sind.
Figur 1 zeigt eine schematische Ansicht einer Förderstrecke gemäß dem Stand der Technik.
Figur 2 zeigt eine schematische Ansicht einer ersten Ausführungsform einer Förderstrecke.
Figur 3 zeigt eine schematische Ansicht einer Transportbahn bestehend aus mehreren Förderstrecken.
Figur 4 zeigt eine schematische Ansicht einer zweiten Ausführungsform einer Förderstrecke.
Figur 5 zeigt eine schematische Ansicht einer dritten Ausführungsform einer Förderstrecke.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung ausgestaltet sein kann und stellen keine abschließende Begrenzung dar.

**Figur 1** zeigt eine schematische Ansicht einer Förderstrecke 1 gemäß dem Stand der Technik. Die Förderstrecke 1 besteht aus einem ersten Förderabschnitt 11 und einem zweiten Förderabschnitt 12, wobei Artikel 20 in Bewegungsrichtung BR transportiert werden.

Im ersten Förderabschnitt 11 werden die Artikel 20 mehrreihig in einem Artikelstrom 18 auf einem Mattenkettenförderer 2 o.ä. bewegt. Der Artikelstrom 18 wird durch seitliche Geländerführungen 3 begrenzt. Zur Aufteilung der Artikel 20 des ankommenden Artikelstroms 18 in Einzelgassen 31 ist im zweiten Förderabschnitt 12 ein Gassenblech 30 vorgesehen. Dieses kann eine Rolle 32 zur erleichterten Lenkung der Artikel 20 aufweisen und ist vorzugsweise mittig zwischen den Geländerführungen 3 angeordnet. Die Rolle 32 ist stirnseitig an dem Gassenblech 30 angebracht und erstreckt sich bevorzugt über die gesamte Höhe des Gassenblechs 30.

Verschieben oder drehen sich Artikel 20 beim Transport auf der ersten Förderstrecke 11 und ordnen sich beispielsweise diagonal an, dann blockiert dieser verdrehte Artikel 22 bei der Zuteilung von zwei Artikeln 20 auf einen Artikel 20 pro Gasse 31 den nachfolgenden Produktstrom, und es kommt zu einer Störung.

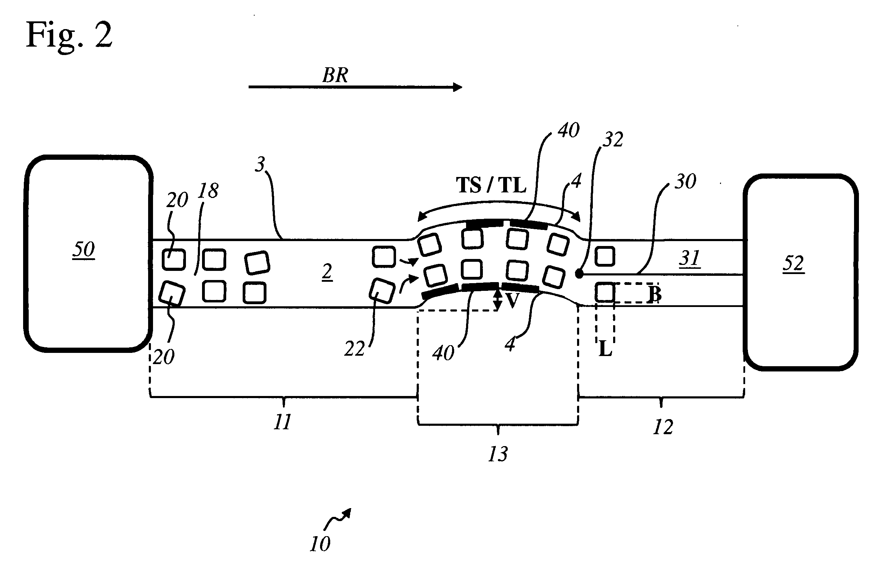

**Figur 2** zeigt eine schematische Ansicht einer Förderstrecke 10, die dem Transport und der Vereinzelung von Artikeln 20 von einer ersten Verarbeitungsvorrichtung 50 zu einer zweiten Verarbeitungsvorrichtung 52 dienen. Diese besteht aus einem ersten Förderabschnitt 11, einem zweiten Förderabschnitt 12 und einem erfindungsgemäßen dritten Förderabschnitt 13, der zwischen dem ersten Förderabschnitt 11 und dem zweiten Förderabschnitt 12 angeordnet ist.

Der dritte Förderabschnitt 13 bildet eine Schikane in Bewegungsrichtung BR der Artikel 20 und führt dadurch zur Ausrichtung von gegebenenfalls verdrehten Artikeln 22.

Die in den dritten Förderabschnitt 13 einlaufenden Artikel 20 werden aufgrund der sichelförmigen Krümmung der seitlichen Führungen 4 der Förderstrecke 10 gedreht, so dass sich insbesondere bei eckigen Artikeln 20 ihre Längsseite L nahezu parallel zur den seitlichen Führungen 4 ausrichtet. Beim Auslaufen der Artikel 20 aus dem dritten Förderabschnitt 13 und Einlaufen in den zweiten Förderabschnitt 12 wird diese korrigierte Ausrichtung der Artikel 20 beibehalten. Dadurch wird eine korrekte Aufteilung der Artikel 20 in die Gassen 31 möglich und eine Blockade verhindert.

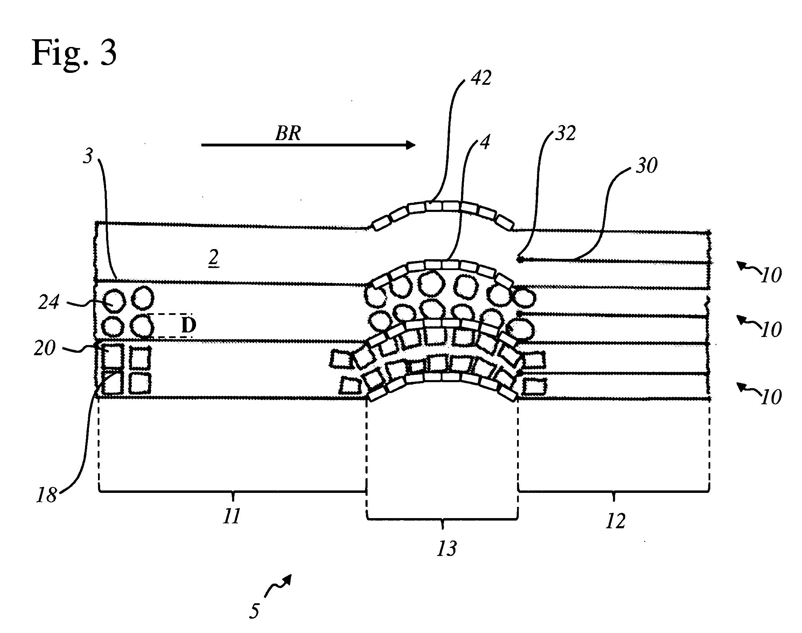

Gemäß einer bevorzugten, hier dargestellten Ausführungsform weichen die Artikel 20, 22 durch die durch den dritten Förderabschnitt 13 gebildete Schikane um mindestens eine halbe Artikelbreite B bzw. bei runden Artikeln 24 (vgl. Figur 3) um mindestens den halben Artikeldurchmesser D von ihrem eigentlichen Fahrweg ab, was zur beschriebenen Ausrichtung der verdrehten Artikel 22 führt.

Insbesondere beschreibt der dargestellte dritte Förderabschnitt 13 eine Art Teilkreissegment TS, das eine Teilumfangslänge TL umfasst, wobei die Teilumfangslänge TL mindestens der größten Breite B oder Länge L bzw. bei runden Behältern dem Durchmesser von drei zu transportierenden Artikeln 20 entspricht.

Die Krümmung bzw. Krümmungen des dritten Förderabschnitts 13 bewirken eine Auslenkung der Artikel 20, 22 gegenüber dem ersten und / oder dem zweiten Förderabschnitt 11, 12 um eine bestimmte Distanz V, wobei diese maximale Auslenkung V durch die genaue Anordnung bzw. Krümmung des dritten Förderabschnitts 13 festgelegt wird. Vorzugsweise entspricht dieser Distanzabschnitt V mindestens der Hälfte der Breite B oder der Länge L der transportierten Artikel 20, 22 je nachdem ob Länge L oder Breite B senkrecht zur Bewegungsrichtung BR verläuft. Werden Artikel 24 (vgl. Figur 3) mit einer kreisrunden Grundfläche transportiert, dann entspricht der Distanzabschnitt V vorzugsweise mindestens der Hälfte des Durchmessers D der Artikel 24.

An den Innenseiten der seitlichen Führungen 4 des dritten Förderabschnitts 13 können zusätzliche Führungselemente 40 angebracht werden, die jeweils an die unterschiedlichen Größen der transportierten Artikel 20, 24 angepasst werden können. Bei einem Formatwechsel bzw. Produktwechsel, beispielsweise bei einer Änderung der Flaschengeometrie (Länge, Breite oder Durchmesser) muss die Grundführung bzw. Führung 4 des dritten Förderabschnitts 13 in seiner Krümmung nicht geändert oder ausgewechselt werden, sondern kann durch einen Austausch der Führungselemente 40 einfach angepasst werden. Die Führungselemente 40 können beispielsweise durch aufstecken, aufklippsen, über magnetische Verbindungselemente, über Schienenstecksystem, anschrauben etc. lösbar an den seitlichen Führungen 4 des dritten Förderabschnitts 13 befestigt werden. Die seitlichen Führungen 4 des dritten Förderabschnitts 13 können zur Erleichterung des Transports der Artikel 20, 24 gleitfördernd ausgestaltet sein. Beispielsweise handelt es sich um glattpolierte Edelstahl- Seitenbleche oder um seitliche Führungen 4, die eine gleitfördernde Beschichtung wie z.B. Teflon oder aber auch eine Gleitlackbeschichtung o.ä., aufweisen.

Die Führungselemente 40 können im gesamten Bereich der seitlichen Führungen 4 des dritten Förderabschnitts 13 oder aber auch nur in einem Teilbereich angebracht sein.

**Figur 3** zeigt eine schematische Ansicht einer Transportbahn 5 bestehend aus mehreren Förderstrecken 10. Insbesondere zeigt **Figur 3**, dass eine erfindungsgemäße Förderstrecke 10 vorzugsweise für den Transport von Artikeln 20 mit einer eckigen Grundfläche geeignet ist, um die Problematik der Blockierung der Einmündung in die Gassen 31 zu verhindern. Eine erfindungsgemäße Förderstrecke 10 kann aber auch für den Transport von Artikeln 24 mit einer runden Grundfläche verwendet werden. Sollen also andere Artikel 20, 24 transportiert werden, ist kein Umbau der Förderstrecke 10 notwendig.

In der **Figur 3** wird auch gezeigt, dass die erfindungsgemäße Schikane bzw. die Führungen 4 des dritten Förderabschnitts 13 stumpf an die Geländerführungen 3 des ersten und zweiten Förderabschnitts 11, 12 anschließen. Die Zeichnung zeigt weiterhin, dass die seitlichen Führungen 4 zur Begrenzung des Artikelstroms 18 aus beweglichen Einzelsegmenten 42 bestehen können. Vorzugsweise sind die Einzelsegmente 42 zueinander in einem Winkel beweglich, entsprechend den Gliedern einer Kette. Somit ist es möglich, einen variablen Radius einzustellen und die Schikane speziell an die transportierten Artikel 20, 24 anzupassen. Es wäre also denkbar die Schikane als "S"-förmige Umlenkung auszuführen.

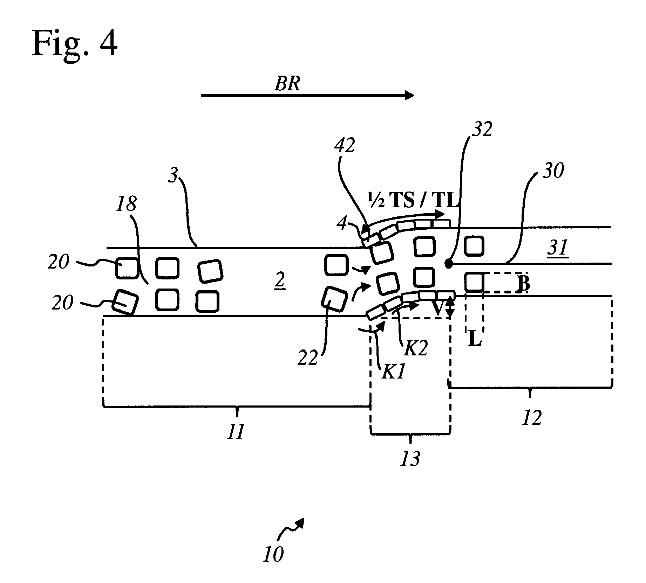

**Figur 4** zeigt eine schematische Ansicht einer zweiten Ausführungsform einer Förderstrecke 10. Hierbei wird der dritte Förderabschnitt 13 (im Gegensatz zu den in den **Figuren 2** **und** **3** dargestellten Ausführungsbeispielen) nur bis zur Hälfte der Teilumfangslänge TL ausgeführt und der zweite Förderabschnitt 12 schließt sich direkt an, so dass der zweite Förderabschnitt 12 parallelverschoben zum ersten Förderabschnitt 11 verläuft.

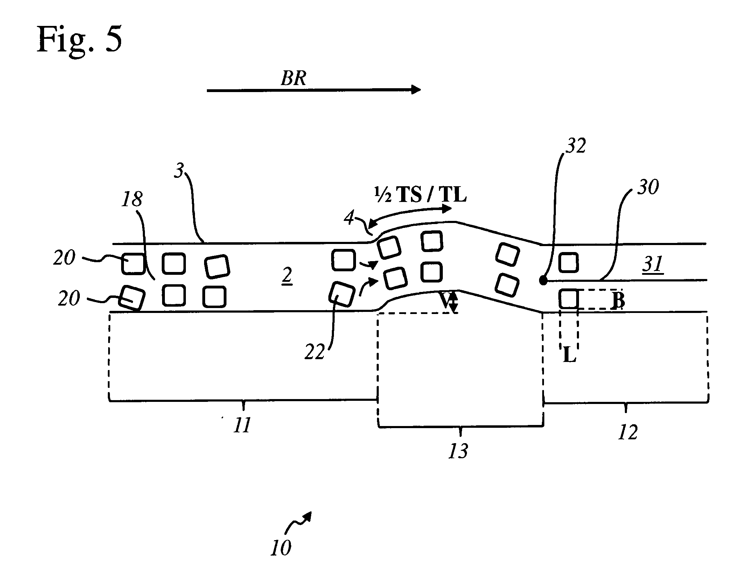

**Figur 5** zeigt eine schematische Ansicht einer dritten Ausführungsform einer Förderstrecke 10. Hierbei wird der dritte Förderabschnitt 13 ab der Hälfte der Teilumfangslänge TL geradlinig ausgeführt. Insbesondere verläuft der zweite Teil des dritten Förderabschnitts 13 in einem Winkel zum ersten Förderabschnitt 11, dass der sich anschließende zweite Förderabschnitt 12 in einer Linie mit dem ersten Förderabschnitt 11 angeordnet ist.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste:

- 1: Förderstrecke
- 2: Mattenkettenförderer
- 3: Geländerführung
- 4: Führung des dritten Förderabschnitts
- 5: Transportbahn
- 10: Förderstrecke
- 11: erster Förderabschnitt
- 12: zweiter Förderabschnitt
- 13: dritter Förderabschnitt
- 18: Artikelstrom
- 20: Artikel mit eckiger Grundfläche
- 22: verdrehter Artikel mit eckiger Grundfläche
- 24: Artikel mit runder Grundfläche
- 30: Gassenblech
- 31: Gasse
- 32: Rolle
- 40: Führungselement
- 42: Einzelsegment
- 50: erste Verarbeitungsvorrichtung
- 52: zweite Verarbeitungsvorrichtung
- B: Artikelbreite
- BR: Bewegungsrichtung
- D: Artikeldurchmesser
- L: Artikellänge
- TL: Teilumfangslänge
- TS: Teilkreissegment
- V: maximale Auslenkung

## Patentansprüche

1. Förderstrecke (10) im Zulaufbereich einer Verpackungsmaschine zur Aufteilung und Ausrichtung von im Massenstrom bzw. Artikelstrom (18) transportierten, eine weitgehend eckige Standfläche bzw. Behälterform mit Längskanten (L) aufweisenden Artikeln (20, 40) in einzelne Gassen, bestehend aus drei Förderabschnitten und einem in der Förderstrecke (10) angeordnetem Endlosförderband bzw. Mattenkettenförderer zum Transport von Artikeln (20, 24), wobei der Massenstrom bzw. Artikelstrom (18) im ersten Förderabschnitt (11) mindestens zwei weitgehend nebeneinander angeordnete Artikel (20, 24) umfasst, wobei im zweiten Förderabschnitt (12) mindestens ein Gassenblech (30) zur Vereinzelung der Artikel (20, 24) in mindestens zwei Gassen (31) angeordnet ist, wobei der erste Förderabschnitt(11) und der zweite Förderabschnitt (12) in einer Linie oder parallel zueinander angeordnet sind, **dadurch gekennzeichnet, dass** zwischen dem ersten und dem zweiten Förderabschnitt (11, 12) der dritte Förderabschnitt (13) angeordnet ist, wobei der dritte Förderabschnitt (13) durch mindestens eine Krümmung entlang von seitlichen Führungen (4) eine Schikane zur Auslenkung der im Massenstrom bzw. Artikelstrom (18) transportierten Artikel (20, 40) bildet, wobei die seitlichen Führungen (4) den Massenstrom bzw. Artikelstrom (18) begrenzen und eine Kurvenbahn bilden.

2. Förderstrecke (10) nach Anspruch 1, wobei die Artikel im ersten und im zweiten Förderabschnitt (11, 13) dieselbe Bewegungsrichtung BR aufweisen.

3. Förderstrecke (10) nach Anspruch 1 oder 2, wobei mindestens eine seitliche Führung (4) aus Einzelsegmenten (42) besteht, die beweglich gelagert sind.

4. Förderstrecke (10) nach einem der voranstehenden Ansprüche, wobei die Krümmung des dritten Förderabschnitts (13) an die transportierten Artikel anpassbar ist, insbesondere wobei die durch den dritten Förderabschnitt (13) gebildete Kurvenbahn eine Teilumfangslänge (TL) umfasst und wobei die Teilumfangslänge (TL) mindestens der größten Breite (L, B) von drei zu transportierenden Artikeln (20, 24) entspricht.

5. Förderstrecke (10) nach einem der voranstehenden Ansprüche, wobei die Krümmung des dritten Förderabschnitts (13) an die transportierten Artikel anpassbar ist, insbesondere wobei die durch den dritten Förderabschnitt (13) gebildete Kurvenbahn eine Krümmung gegenüber dem ersten und / oder dem zweiten Förderabschnitt (11, 12) zur Auslenkung der Artikel (20, 24) um eine Distanzabschnitt (V) gegenüber dem ersten und / oder dem zweiten Förderabschnitt (11, 12) umfasst und wobei der Distanzabschnitt (V) mindestens der Hälfte der Breite (B) oder Länge (L) des Artikels (20) senkrecht zur Laufrichtung oder mindestens der Hälfte des Durchmessers des Artikels (24) entspricht.

6. Förderstrecke (10) nach einem der voranstehenden Ansprüche, wobei die seitlichen Führungen (4) des dritten Förderabschnitts (13) gleitfördernd beschichtet sind.

7. Förderstrecke (10) nach einem der voranstehenden Ansprüche, wobei die seitlichen Führungen (4) des dritten Förderabschnitts (13) und / oder die Geländerführungen (3) des ersten und zweiten Förderabschnitts (11, 12) parallelverschieblich sind.

8. Förderstrecke (10) nach einem der voranstehenden Ansprüche, wobei das mindestens eine Gassenblech (30) des zweiten Förderabschnitts (12) eine Rolle (32) umfasst.

9. Förderstrecke (10) nach einem der voranstehenden Ansprüche, wobei der dritte Förderabschnitt (13) lösbar befestigte, auswechselbare Führungselemente (40) für die Artikel (20, 24) umfasst.

10. Förderstrecke (10) nach Anspruch 9, wobei die Führungselemente (40) gleitfördernd ausgestaltet sind.

## Claims

1. Conveyor line (10) in a feed area of a packaging machines for separating and directing articles (20, 24) transported in a mass flow stream or an article stream (18) into single lanes, the articles (20, 24) having a largely square base or square form with longitudinal edges (L), the conveyor line comprising three conveyor sections and an endless conveyor belt or a modular conveyor belt for the transport of articles (20, 24) arranged in the conveyor line, whereby within the first conveyor section (11) the mass flow stream or the article stream (18) comprises at least two articles (20, 24) arranged mostly side by side, whereby at least one lane dividing plate (30) for the separation of articles (20, 24) into at least two lanes (31) is arranged within the second conveyor section (12), whereby the first conveyor section (11) and the second conveyor section (12) are in line or parallel to each other, **characterized in that** a third conveyor section (13) is arranged between the first and the second conveyor section (11, 12), whereby the third conveyor section (13) comprises a chicane defined by a curvature along at least one curved lateral guidance element (4) for restricting the mass flow stream or article stream (18) and forming a curved path.

2. Conveyor line (10) according to claim 1, whereby the articles move in the same transport direction BR within the first and the second conveyor section (11, 12).

3. Conveyor line (10) according to claim 1 or 2, whereby at least one of the lateral guidance elements (4) consists of individual segments (42) that are movably supported.

4. Conveyor line (10) according to one of the previous claims, whereby curvature of the third conveyor section (13) is adjustable to the transported articles (20, 24), especially whereby the curved path formed by the third conveyor section (13) comprises a partial peripheral length (TL) and whereby the partial circumferential length (TL) corresponds to at least the broadest width (L, B) of three transported articles (20, 24).

5. Conveyor line (10) according to one of the previous claims, whereby the curvature of the third conveyor section (13) is adjustable to the transported articles (20, 24), especially whereby the curved path formed by the third conveyor section (13) exhibits a curvature towards the first and / or second conveyor (11, 12) section for a deviation of the articles (20, 24) about a distance (V) from the first and / or second conveyor section (11, 12) and whereby the distance (V) corresponds to at least half the width (B) or length (L) of the article (20) vertical to the transport direction or at least half the diameter of the article (24).

6. Conveyor line (10) according to one of the previous claims, whereby the lateral guidance elements (4) of the third conveyor section (13) comprise a slip promoting coating.

7. Conveyor line (10) according to one of the previous claims, whereby the lateral guidance elements (4) of the third conveyor section (13) and / or the guidance rails (3) of the first and second conveyor section (11, 12) section are movable parallel to each other.

8. Conveyor line (10) according to one of the previous claims, whereby the at least one lane dividing plate (30) of the second conveyor section (12) comprises a roller (32).

9. Conveyor line (10) according to one of the previous claims, whereby the third conveyor section (13) comprises detachable guidance elements (40) for the articles (20, 24).

10. Conveyor line (10) according to claim 9, whereby the guidance elements (40) have slip promoting properties.

## Revendications

1. Trajet de transport (10) dans la zone d'entrée d'une machine d'emballage pour répartir et orienter dans des voies individuelles des articles (20, 24) transportés dans un courant de masse ou bien courant d'articles (18) et présentant une surface de pose ou bien forme de récipient dans une large mesure anguleuse avec des arêtes longitudinales (L), se composant de trois sections de transport et d'une courroie de transport sans fin ou bien d'un convoyeur à chaîne et tapis pour le transport d'articles (20, 24) qui est disposé(e) dans ledit trajet de transport (10), le courant de masse ou bien courant d'articles (18) dans la première section de transport (11) comprenant au moins deux articles (20, 24) disposés dans une large mesure l'un à côté de l'autre, dans la deuxième section de transport (12) étant disposée au moins une tôle de voie (30) destinée à séparer lesdits articles (20, 24) dans au moins deux voies (31), ladite première section de transport (11) et ladite deuxième section de transport (12) étant disposées en linge ou parallèlement l'une à l'autre, **caractérisé par le fait qu'**entre lesdites première et deuxième sections de transport (11, 12) est disposée la troisième section de transport (13), ladite troisième section de transport (13) formant par au moins une courbure le long de guides latéraux (4) une chicane pour la déviation des articles (20, 24) transportés dans le courant de masse ou bien courant d'articles (18), lesdits guides latéraux (4) délimitant le courant de masse ou bien courant d'articles (18) et formant une trajectoire courbe.

2. Trajet de transport (10) selon la revendication 1, dans lequel les articles présentent la même direction de déplacement BR dans les première et deuxième sections de transport (11, 12).

3. Trajet de transport (10) selon la revendication 1 ou 2, dans lequel au moins un guide latéral (4) se compose de segments individuels (42) qui sont logés de manière mobile.

4. Trajet de transport (10) selon l'une quelconque des revendications précédentes, dans lequel la courbure de ladite troisième section de transport (13) peut être adaptée aux articles transportés, en particulier la trajectoire courbe formée par ladite troisième section de transport (13) comprenant une longueur circonférentielle partielle (TL) et la longueur circonférentielle partielle (TL) correspondant au moins à la plus grande largeur (L, B) de trois articles (20, 24) à transporter.

5. Trajet de transport (10) selon l'une quelconque des revendications précédentes, dans lequel la courbure de ladite troisième section de transport (13) peut être adaptée aux articles transportés, en particulier la trajectoire courbe formée par ladite troisième section de transport (13) comprenant une courbure par rapport à la première et/ou à la deuxième sections de transport (11, 12) pour dévier les articles (20, 24) d'une portion de distance (V) par rapport à la première et/ou à la deuxième sections de transport (11, 12) et ladite portion de distance (V) correspondant au moins à la moitié de la largeur (B) ou longueur (L) des articles (20) perpendiculaire à la direction de marche ou au moins à la moitié du diamètre de l'article (24).

6. Trajet de transport (10) selon l'une quelconque des revendications précédentes, dans lequel les guides latéraux (4) de ladite troisième section de transport (13) sont revêtus de manière à favoriser le glissement.

7. Trajet de transport (10) selon l'une quelconque des revendications précédentes, dans lequel les guides latéraux (4) de la troisième section de transport (13) et/ou les guides de garde-corps (3) des première et deuxième sections de transport (11, 12) sont parallèlement déplaçables.

8. Trajet de transport (10) selon l'une quelconque des revendications précédentes, dans lequel ladite au moins une tôle de voie (30) de la deuxième section de transport (12) comprend un rouleau (32).

9. Trajet de transport (10) selon l'une quelconque des revendications précédentes, dans lequel la troisième section de transport (13) comprend des éléments de guidage (40) pour les articles (20, 24), qui sont fixés de manière amovible et échangeables.

10. Trajet de transport (10) selon la revendication 9, dans lequel lesdits éléments de guidage (40) sont réalisés de manière à favoriser le glissement.
